# DEMANDE DE BREVET EUROPEEN

(11) **EP 1 918 470 A1**
(43) Date de publication de la demande: **07.05.2008**
(21) Numéro de dépôt: 07109025.2
(22) Date de dépôt: 28.05.2007
(51) Int. Cl.: E04B 1/76

(54) **Matériau thermoisolant à base d'un matériau textile non-tissé constitué de fibres organiques**

(30) Priorité: 30.05.2006 FR 0604822
(71) Demandeur: Electricité de France, 75008 Paris (FR)
(72) Inventeur: Milleville, Pierre-Henri, 77670, Vernou (FR); Duforestel, Thierry, 77250, Moret sur Loing (FR); Yrieix, Bernard, 77250, Moret sur Loing (FR)
(74) Mandataire: Cabinet Plasseraud

(57) **Abrégé**

L'invention concerne l'utilisation, pour l'isolation thermique de bâtiments, d'un matériau textile non-tissé constitué essentiellement de fibres organiques d'une finesse comprise entre 0,0025 dtex et 4,5 dtex, ledit matériau textile non tissé ayant une épaisseur d'au moins 40 mm et une conductivité thermique λ, mesurée selon la norme ISO 8301, inférieure à 0,045 W/m.K, les fibres étant de préférence non hydrophiles et non hygroscopiques.

## Description

La présente invention concerne un nouveau matériau thermoisolant comprenant un matériau textile non-tissé épais constitué essentiellement de fibres organiques, de préférence de fibres organiques non hydrophile et non hygroscopique, ainsi que l'utilisation d'un tel matériau pour l'isolation thermique de bâtiments.

Les laines minérales, telles que les laines de verre et laines de roche, constituent environ les deux tiers du volume des isolants thermiques utilisés actuellement dans le bâtiment. Depuis la naissance du besoin d'isolation thermique des bâtiments, suite au premier choc pétrolier du milieu des années 70, ces matériaux d'isolation n'ont guère évolué. Pourtant, les exigences d'isolation n'ont pas cessé de croître depuis, et le gain de performance exigé s'est donc principalement traduit par une augmentation des épaisseurs des matériaux utilisés. Ainsi, les laines minérales présentent actuellement une conductivité thermique théorique de l'ordre de 0,034 à 0,058 W/m.K (0.040 W/m.K en moyenne), ce qui implique que l'obtention d'une résistance thermique suffisante selon les préconisations et réglementation thermiques en vigueur pour la construction, de l'ordre de 2,4 m²K/W pour les murs de bâtiments et de l'ordre de 4,5 m²K/W pour les toitures, nécessite la pose de ces matériaux en une épaisseur comprise entre 8 et 20 cm environ.

Par ailleurs, le secteur de l'habillement, en permanente évolution, a généré, en raison des attentes en termes de propriétés, de coûts et de contraintes liés à l'utilisation sur l'homme, de très nombreux développements de textiles, tant en ce qui concerne la nature et la forme des fibres qu'en ce qui concerne leur mode d'assemblage en produits textiles. On a ainsi créé ces dernières années une grande variété de produits textiles dits « techniques » présentant des propriétés nouvelles telles qu'une bonne résistance au feu, un comportement hydrique différentiel, une haute résistance mécanique etc.

Certains produits textiles sont déjà utilisés dans le secteur du bâtiment, soit comme renfort structurel du bâti, soit comme barrière à l'eau, à la vapeur et à l'air, soit encore pour tenter de mieux l'isoler. Cependant, à ce jour, les matériaux textiles utilisés n'ont encore jamais atteint les performances thermiques des produits d'isolation classiques à base de laine de roche ou laine de verre et n'ont jamais pu être certifiés selon la norme EN 13172 quant à leurs performances thermiques réelles.

La Demanderesse, dans le cadre de ses recherches visant à développer de nouveaux produits d'isolation du bâtiment, a découvert que certains matériaux textiles particuliers, connus dans le domaine de l'habillement, pouvaient être fabriqués en des épaisseurs jusqu'ici inexistantes pour ces matériaux et être alors utilisés pour répondre à une problématique d'isolation thermique de bâtiments.

Dans le cadre d'une telle utilisation de textiles non-tissés épais à base de fibres organiques pour l'isolation thermique de bâtiments, un aspect important pour garantir un bon pouvoir isolant sur une longue durée, de l'ordre de plusieurs années voire plusieurs dizaines d'années, est l'affinité des fibres organiques utilisées pour l'eau. Plus cette affinité est faible, c'est-à-dire moins les fibres organiques sont hydrophiles et hygroscopiques, meilleur sera le pouvoir isolant à long terme du matériau textile.

Le brevet US 5 057 168 divulgue un procédé de fabrication de matériaux non tissés constitués de fibres dites « isolantes » *(insulative fibres),* de fibres « d'écartement » *(stilt fibres)* et de fibres « de liaison » *(binder* fibres), les fibres de liaison étant soumises au cours du procédé à une étape de fusion et servant par conséquent uniquement à l'assemblage des autres fibres. L'exemple 1 de ce document décrit la fabrication de matelas épais à base de fibres de coton (fibres isolantes et fibres d'écartement) collées au moyen de 20 % en poids de fibres en polyester, l'exemple 2 divulgue des matelas similaires à base de 70 % d'un mélange de fibres isolantes (coton, laine et rayonne) et de 30 % en poids de fibres de liaison en polyester.

Ce document n'envisage toutefois à aucun moment l'utilisation de ces matelas pour l'isolation de bâtiments. Il ne mentionne pas non plus l'intérêt de sélectionner, parmi l'ensemble des fibres isolantes disponibles, en particulier celles qui ont une faible affinité pour l'eau, autrement dit des fibres plutôt hydrophobes et non hygroscopiques. Or, pour les raisons exposées ci-dessus cet aspect est généralement important pour garantir un bon pouvoir isolant pour des produits d'isolation exposés à des conditions d'humidité élevée pendant des périodes très longues.

La présente invention a par conséquent pour objet l'utilisation, pour l'isolation thermique de bâtiments, d'un matériau thermoisolant comportant un matériau textile non-tissé constitué essentiellement de fibres organiques d'une finesse comprise entre 0,0025 dtex et 4,5 dtex, de préférence entre 0,1 et 1 dtex, ledit matériau textile non tissé ayant une épaisseur d'au moins 40 mm et une conductivité thermique λ, mesurée selon la norme ISO 8301, inférieure à 0,045 W/m.K, de préférence inférieure à 0,038 W/m.K.

L'invention a en outre pour objet un procédé d'isolation thermique d'un bâtiment, comprenant le recouvrement d'une ou plusieurs surfaces extérieures ou intérieures dudit bâtiment par une ou plusieurs couches superposées d'un matériau thermoisolant ou l'incorporation d'une ou de plusieurs couches d'un matériau thermoisolant dans la structure des parois dudit bâtiment, ledit matériau thermoisolant comportant un matériau textile non-tissé constitué essentiellement de fibres organiques d'une finesse comprise entre 0,0025 dtex et 4,5 dtex, de préférence entre 0,1 et 1 dtex, ledit matériau textile non tissé ayant une épaisseur d'au moins 40 mm et une conductivité thermique λ, mesurée selon la norme ISO 8301, inférieure à 0,045 W/m.K, de préférence inférieure à 0,038 W/m.K.

Les valeurs de conductivité thermique indiquées et revendiquées dans la présente doivent être comprises comme étant celles du matériau à l'équilibre d'hydratation.

Dans ce procédé, l'épaisseur totale de l'ensemble des couches superposées est de préférence suffisante pour obtenir une résistance thermique au moins égale à 2.4 m².K/W pour l'isolation thermique des murs et au moins égale à 4.5 m².K/W pour l'isolation thermique des toitures.

La signification du terme « non-tissé » tel que utilisé dans la présente invention est celle définie par l'Organisation Internationale de Normalisation dans la norme ISO 9002 (1988). On peut indiquer ici, de manière simplifiée, qu'un matériau textile non-tissé se caractérise généralement par l'absence de fils : les fibres individuelles sont incorporées directement dans le produit textile sans être préalablement assemblées en forme de fils qui serviront ensuite à l'élaboration de l'étoffe.

Le matériau textile non-tissé de la présente invention est constitué essentiellement de fibres organiques d'une finesse comprise entre 0,0025 dtex et 4,5 dtex, autrement dit lesdites fibres représentent au moins 90 % en poids, de préférence au moins 95 % en poids et idéalement au moins 98 % en poids de l'ensemble des fibres formant ledit matériau textile non textile.

La partie complémentaire, c'est-à-dire les au plus 10 % en poids, peuvent être formés par exemple par des fibres minérales, telles des laines de verre ou laines de roche, ou encore par des fibres organiques plus grosses destinées par exemple à renforcer la résistance mécanique du matériau non tissé.

Par ailleurs, l'épaisseur du matériau textile non tissé à l'état non comprimé, est de préférence au moins égale à 80 %, en particulier au moins égale à 90 %, et idéalement au moins égale à 95 % de l'épaisseur totale du matériau thermoisolant.

Celui-ci peut en effet comporter, outre le matériau textile non tissé, une ou plusieurs couches de protection, de renfort, d'imperméabilisation etc. formées par exemple par des plaques, des films ou feuilles en matière plastique, expansée ou non, ou par d'autres types de textiles tissés ou non tissés.

Dans un mode de réalisation particulièrement préféré, le matériau thermoisolant selon l'invention ne comprend pas d'autres couches que celle du matériau textile non-tissé formé de fibres organiques fines.

L'utilisation de fibres organiques fines dans les matériaux selon l'invention, a permis d'obtenir des matériaux d'isolation thermique pour le bâtiment présentant des conductivités thermiques équivalentes voire inférieures à celles des matériaux à base de fibres minérales.

Ceci est dû, d'une part, au faible coefficient de conduction thermique des matériaux organiques formant les fibres. Bien que des fibres naturelles telles que la laine ou la soie présentent de bonnes caractéristiques d'isolation thermique, on préfère tout particulièrement utiliser dans les matériaux thermoisolants de la présente invention des fibres à base de polymères synthétiques qui, non seulement ont un excellent pouvoir d'isolation thermique, mais peuvent en outre être obtenus à très faible coût.

La très grande variété de polymères synthétiques connus et utilisés couramment dans le domaine de l'habillement, permet en outre de préparer des matériaux ayant un profil de propriétés mécaniques et physico-chimiques « sur mesure ». Un choix approprié de polymères permet ainsi de conférer aux fibres des propriétés antibiotiques (bactéricides, fongicides), de moduler leurs propriétés mécaniques (élasticité, compressibilité, rigidité, résistance à la chaleur), hydriques (perméabilité à la vapeur d'eau) ou chimiques (résistance aux solvants, à l'hydrolyse, au rayonnement) ou encore de conférer aux matériaux des fonctions décoratives, par exemple grâce à l'incorporation de colorants ou de pigments.

De plus, le fait d'utiliser pour les matériaux thermoisolants de la présente invention des fibres utilisées habituellement dans le domaine de l'habillement permet de réduire considérablement les risques d'allergie lorsque le matériau vient en contact avec la peau, notamment dans le cadre de sa fabrication ou de sa mise en place.

On peut citer à titre d'exemples de polymères synthétiques préférés pour la fabrication des fibres synthétiques utilisées dans la présente invention, les polyesters, notamment les poly(alkylène téréphtalates) tels que le poly(éthyléne téréphtalate), les polyamides tels que le polyamide 6 ou le polyamide 6,6, les polymères acryliques tels que le polyacrylonitrile, les polyuréthannes tels que l'élasthane, le poly(alcool vinylique), les polyoléfines telles que le polyéthylène ou le polypropylène, les polymères phénoliques, les polyacrylates, les polymères vinyliques chlorés ou fluorés tels que le poly(chlorure de vinyle), l'aramide, les poly(arylétheréthercétone) (PEEK), les poly(benzimidazole) (PBI), les poly(éther imide) (PEI) et les poly(sulfure de phénylène) (PPS)

On peut citer à titre d'exemples de fibres d'origine naturelle, les fibres cellulosiques choisies parmi le coton, le lin, le jute, le chanvre et autres fibres végétales, et les fibres protéiniques choisies parmi la soie, la laine et les poils et plumes d'animaux. Bien que ces fibres naturelles soient généralement d'un coût supérieur à celui des fibres synthétiques, leur utilisation peut s'avérer très intéressante à plus long terme dans le cadre d'un développement durable.

La conductivité thermique des matériaux textiles non tissés selon la présente invention dépend toutefois non seulement de la nature chimique des fibres synthétiques utilisées, mais également de la finesse de celles-ci, de leur affinité pour l'eau, de leur mode d'assemblage en nappes de non-tissés et de l'épaisseur de ces nappes non tissées.

La Demanderesse a en effet réalisé de nombreux essais avec des textiles tissés ou tricotés en utilisant différentes finesses de fibres, plusieurs grosseurs de fils, et en fabriquant des matériaux textiles de plusieurs masses volumiques et en plusieurs épaisseurs, éventuellement par superposition de plusieurs couches de textiles. Aucun de ces essais n'a malheureusement permis d'obtenir des conductivités thermiques équivalentes à celles des produits à base de fibres minérales. Le caractère non-tissé du matériau textile utilisé dans la présente invention est par conséquent une caractéristique essentielle.

Comme indiqué ci-dessus, les fibres formant le matériau textile thermoisolant de la présente invention ont de préférence une très faible affinité pour l'eau. Cette faible affinité pour l'eau se manifeste par un caractère peu hydrophile et/ou par une hygroscopicité peu élevée.

Les fibres organiques utilisées dans la présente invention sont de préférence des fibres non hydrophiles au sens de la norme NFP75-305.

L'hygroscopicité des fibres peut être évaluée selon deux méthodes différentes et les fibres utilisées dans la présente invention satisfont au moins à l'un des deux essais d'évaluation suivants, de préférence aux deux :
(1) Taux d'humidité massique à l'équilibre mesuré à 23 °C et 50 % d'humidité relative selon la norme NF EN 12429. Ce taux d'humidité doit être inférieur à 4 %.
(2) Taux massique d'eau absorbée, mesuré en essai d'immersion partielle selon la norme NF EN 12087. Ce taux massique d'eau absorbée doit être inférieur à 10 %.

La plupart des fibres naturelles, telles que le coton utilisé de préférence dans US 5 057 168, sont de nature plutôt hydrophile et ne satisfont pas aux critères ci-dessus. Il est par conséquent fortement recommandé de les soumettre, avant ou après assemblage sous forme de non-tissés, à des traitements connus afin des rendre non hydrophiles (au sens de la norme NFP75-305) et/ou non hygroscopiques (au sens des normes NF EN 12429 ou NF EN 12087).

Par ailleurs, comme indiqué ci-dessus, les fibres organiques formant le matériau textile non tissé de la présente invention ont une finesse, exprimée par leur poids par unité de longueur, comprise entre 0,0025 décitex et 4,5 décitex (1 décitex = 0,1 g/1000 m), de préférence entre 0,1 décitex et 1 décitex. Pour des fibres à section circulaire, qui ne représentent toutefois qu'un mode de réalisation particulier, cette gamme de finesse correspond à peu près à un diamètre de fibres compris entre 0,5 µm et 20 µm, de préférence compris entre 3 µm et 10 µm.

La figure 1 illustre l'importance du choix de cette gamme de finesse des fibres. Elle montre en effet l'évolution de la conductivité thermique (λ), exprimée en mW/m.K, en fonction de la masse volumique d'un matériau non tissé fabriqué à partir d'une population de fibres en polymères synthétiques à section circulaire ayant un diamètre compris entre 3 et 10 µm (courbe 1 selon l'invention) et d'un matériau non tissé fabriqué dans les mêmes conditions à partir d'une population de fibres ayant un diamètre compris entre 20 et 25 µm (courbe 2 comparative). La comparaison de ces courbes montre que l'utilisation de fibres ayant une finesse dans la gamme revendiquée, permet
- soit d'atteindre une conductivité thermique donnée, par exemple 35 mW/m.K, avec une masse volumique de 25 kg/m³, deux fois moindre que celle nécessaire pour un matériau non tissé constitué de fibres plus grosses (50 kg/m³), avantage qui permet une réduction importante des coûts de production du matériau thermoisolant,
- soit d'atteindre des conductivités thermiques très faibles, en particulier inférieures à 35 mW/m.K, difficiles voire impossibles à obtenir avec des fibres plus grosses, avantage qui permet une diminution de l'épaisseur du matériau isolant.
   Des conductivités thermiques particulièrement intéressantes ont par ailleurs été obtenues avec des fibres creuses.
   La figure 1 montre également la gamme de masse volumique préférée des matériaux non tissés comprise entre 5 et 50 kg/m³, de préférence entre 10 et 40 kg/m³ et en particulier entre 15 et 35 kg/m³. En dessous de 5 kg/m³ en effet, la conductivité thermique est trop élevée et dépasse généralement la valeur de 65 kg/m³, limite supérieure pour la certification des isolants thermiques. Au-delà d'une masse volumique de 50 kg/m³, le gain en pouvoir isolant devient négligeable par rapport à l'augmentation du coût de production des matériaux plus denses.
   La longueur des fibres organiques utilisées n'a pas une importance capitale sur la conductivité thermique des matériaux thermoisolants de la présente invention. Cette longueur est généralement choisie en fonction du procédé de fabrication des nappes non tissées.
   Enfin, l'invention a pour objet un nouveau matériau thermoisolant, destiné à être utilisé pour l'isolation thermique de bâtiments, comportant un matériau textile non-tissé constitué essentiellement de fibres organiques d'une finesse comprise entre 0,0025 dtex et 4,5 dtex, de préférence entre 0,1 et 1 dtex, ledit matériau textile non tissé ayant une épaisseur d'au moins 40 mm et une conductivité thermique λ, mesurée selon la norme ISO 8301, inférieure à 0,045 W/m.K, de préférence inférieure à 0,038 W/m.K, les fibres organiques étant des fibres à la fois non hydrophiles au sens de la norme NFP75-305 et non hygroscopiques présentant un taux d'humidité massique à l'équilibre, mesuré à 23 °C et 50 % d'humidité relative selon la norme NF EN 12429, inférieur à 4 %, et/ou un taux massique d'eau absorbée, mesuré en essai d'immersion partielle selon la norme NF EN 12087, inférieur à 10 %.
   Un autre critère d'une importance déterminante pour l'utilisation dans le domaine du bâtiment est la résistance au feu des matériaux thermoisolants. Le matériau thermoisolant a de préférence une tenue au feu le classant dans les catégories A à D, de préférence A à C, des Euroclasses de réaction au feu. Cette classification des Euroclasses reprend la classification de la norme NF EN 13501, qui utilise les méthodes d'essai des normes NF EN 1363, 1364, 1365 et 1366, concernant les essais d'évaluation de résistance au feu des matériaux de construction, y compris les matériaux isolants thermiques. Cette résistance au feu peut être obtenue de manière connue, par exemple par addition ou imprégnation du matelas non tissé avec des agents ignifugeants appropriés.
   Les produits textiles non-tissés peuvent être préparés selon des procédés bien connus dans le domaine du textile et dans le domaine de la fabrication du papier. La formation des nappes de fibres peut se faire par exemple
- selon la voie sèche à partir de fibres préexistantes par nappage mécanique ou pneumatique. Ce procédé utilise généralement des fibres courtes, ayant une longueur de 25 mm à 50 mm, ou des fibres dites longues ayant une longueur de 50 à 200 mm.
- par voie fondue : le polymère fondu est extrudé sous forme de filaments fins qui sont étirés jusqu'à la finesse souhaitée voire jusqu'à la rupture du filament. On obtient ainsi soit des nappes dites « filées-liées » *(spun-bonded)* si le taux d'étirage appliqué n'entraîne pas la rupture des filaments (filaments de longueur infinie), soit des produits obtenus par « fusion-soufflage » *(melt-blowing)* lorsque le taux d'étirage est tel que les filaments s'affinent jusqu'à la rupture. La longueur des fibres est alors généralement comprise entre 10 mm et 50 mm selon le taux d'étirage utilisé.
- par voie humide : une suspension aqueuse de fibres courtes (longueur de l'ordre de 10 mm) s'écoule sur une grille en mouvement qui a pour fonction de retenir les fibres. Le dépôt obtenu est ensuite essoré et séché dans un flux d'air chaud ;
- par voie « air-laid » : des fibres courtes, généralement de l'ordre de 10 mm, sont mises en suspension dans un flux d'air puis aspirées et déposées en nappes sur un convoyeur en mouvement.

Après formation des nappes de fibres organiques, celles-ci sont ensuite généralement soumises à une étape de
- liage mécanique, par exemple par aiguilletage ou hydroliage,
- liage chimique par application d'un liant approprié qui sera ensuite éventuellement soumis à une étape de polymérisation et/ou de réticulation. Le liant peut être déposé en une quantité allant de 5 à 60 % en masse rapporté à la masse de la nappe de fibres, ou
- liage thermique : des fibres ou particules thermofusibles déposées pendant ou après la formation de la nappe sont fondues par chauffage de celle-ci jusqu'à une température supérieure au point de fusion de ses composants. Ce chauffage peut se faire par exemple par calandrage entre deux cylindres chauffés
ou encore dans un four à air chaud ;
ou une combinaison de ceux-ci.

Bien entendu, les procédés de formation de nappes et de liage connus doivent être adaptés aux fortes épaisseurs des produits textiles de la présente invention.

Le matériau textile non tissé utilisé dans le matériau thermoisolant de la présente invention a de préférence une épaisseur comprise entre 40 et 120 mm, en particulier une épaisseur comprise entre 50 et 100 mm.

La valeur supérieure de cette fourchette (120 mm) correspond, pour la limite supérieure de conductivité thermique revendiquée (0,045 W/m.K), à une résistance thermique d'environ 2,7 m²K/W, valeur légèrement supérieure à la valeur minimale réglementaire préconisée en construction neuve pour l'isolation de mûrs de bâtiments, égale à 2,4 m²K/W.

Le matériau thermoisolant selon l'invention peut se présenter sous différentes formes permettant son application sur ou dans les parois des bâtiments qu'il s'agit d'isoler. Il se présente de préférence sous forme d'une bande ou d'un rouleau de matériau continu qui peut être découpé selon les dimensions souhaitées lors de sa pose, ou bien sous forme d'éléments individuels, souples ou rigides, de préférence sous forme d'éléments individuels de forme rectangulaire, que l'on pourra poser les uns à côté des autres afin de couvrir une grande surface. Les bords des rouleaux, matelas, feuilles, plaques ou panneaux, peuvent éventuellement avoir des formes particulières ou comporter des dispositifs permettant de les assembler les uns aux autres en les superposant ou juxtaposant les uns aux autres.

L'utilisation de fibres organiques d'une finesse comprise entre 0,0025 dtex et 4,5 dtex, sous forme de textile non tissé ayant une épaisseur minimale au moins égale à 40 mm, permet ainsi la fabrication d'un matériau thermoisolant qui constitue une alternative intéressante aux isolants thermiques à base de laines minérales. Les matériaux thermoisolants ainsi obtenus présentent des performances thermiques équivalentes à celles de la plupart des laines minérales. La figure 2 montre, d'une part, deux courbes continues (conductivité thermique = f(masse volumique)) entre lesquelles sont situées l'ensemble des isolants thermiques à base de laines minérales certifiés RT2000, et d'autre part un ensemble de points correspondant aux échantillons de matériaux textiles non tissés selon l'invention du tableau 1 suivant :

**Tableau 1 : Matériaux textiles non tissés à base de fibres organiques synthétiques selon l'invention**

| nature du polymère | finesse des fibres (dTEX) | épaisseur du non tissé | Masse volumique (kg/m³) | Lambda à 23°C(mW/m.K) |
|---|---|---|---|---|
| 100% Polyester | 4,34 | 40,0 | 9,3 | 51,2 |
| 100% Polyester | 4,34 | 40,0 | 9,6 | 51,0 |
| 100% Polyester | 4,34 | 40,0 | 9,3 | 51,8 |
| 100% Polyester | 4,34 | 40 | 9,9 | 50,7 |
| 100% Polyester | 4,34 | 81,1 | 8,6 | 54,7 |
| 100% Polyester | 4,34 | 77,9 | 9,3 | 54,0 |
| 100% Polyester | 4,34 | 77,8 | 9,7 | 54,0 |
| 100% Polyester | 4,34 | 120,0 | 8,9 | 54,5 |
| 100% Polyester | 0,0975 - 1,084 | 40,6 | 12,2 | 40,4 |
| 100% Polyester | 4,34 | 41,0 | 14,4 | 48,8 |
| 100% Polyoléfine | 4,34 | 56,7 | 66,0 | 33,5 |
| 65% polyoléfine + 35% polyester | 0,0975 - 1,084 | 51,7 | 24,4 | 35,5 |
| 65% polyoléfine + 35% polyester | 0,0975 - 1,084 | 40,0 | 29,9 | 34,4 |
| 65% polyoléfine + 35% polyester | 0,0975 - 1,084 | 68,7 | 31,4 | 33,9 |
| 70% polyester + 30 % (polyester + copolymère) | 4,34 | 42,0 | 10,0 | 52,6 |
| 70% polyester+ 30% (polyester + copolymère) | 4,34 | 55,9 | 10,1 | 52,8 |
| 70% polyester+ 30 % (polyester + copolymère) | 4,34 | 55,7 | 10,2 | 54,0 |
| 70% polyester+ 30 % (polyester + copolymère) | 4,34 | 40,8 | 9,7 | 53,5 |
| 70% polyester+ 30 % (polyester + copolymère) | 4,34 | 40,0 | 9,8 | 53,7 |

La figure 2 montre ainsi que l'ensemble des échantillons de matériaux textiles non tissés selon l'invention ont des performances d'isolation thermique (conductivité thermique pour une masse volumique donnée) identiques ou proches de celles des produits à base de laine minérale certifiés RT2000.

L'utilisation de fibres organiques et en particulier de fibres à base de polymères synthétiques permet en outre de conférer aux matériaux textiles non tissés d'autres propriétés intéressantes telles qu'une faible reprise d'humidité, des propriétés ignifugeantes satisfaisantes, une bonne résistance à la dégradation par des microorganismes, des propriétés mécaniques améliorées par rapport aux laines minérales (élasticité, résistance à la rupture en traction etc.). Les matériaux textiles non tissés utilisés ont en outre un pouvoir d'isolation sonore équivalent voire supérieur à celui des produits à base de laine minérale.

## Revendications

1. Utilisation, pour l'isolation thermique de bâtiments, d'un matériau thermoisolant comportant un matériau textile non-tissé constitué essentiellement de fibres organiques d'une finesse comprise entre 0,0025 dtex et 4,5 dtex, de préférence entre 0,1 et 1 dtex, ledit matériau textile non tissé ayant une épaisseur d'au moins 40 mm et une conductivité thermique λ, mesurée selon la norme ISO 8301, inférieure à 0,045 W/m.K, de préférence inférieure à 0,038 W/m.K.

2. Utilisation selon la revendication 1, **caractérisée par le fait que** les fibres organiques sont des fibres naturelles, artificielles ou synthétiques, ou un mélange de telles fibres, de préférence des fibres synthétiques ou artificielles ou un mélange de telles fibres.

3. Utilisation selon la revendication 1 ou 2, **caractérisée par le fait que** les fibres organiques sont des fibres non hydrophiles au sens de la norme NFP75-305.

4. Utilisation selon l'une quelconque des revendications précédentes, **caractérisée par le fait que** les fibres organiques sont des fibres non hygroscopiques ayant un taux d'humidité massique à l'équilibre, mesuré à 23 °C et 50 % d'humidité relative selon la norme NF EN 12429, inférieur à 4 %.

5. Utilisation selon l'une quelconque des revendications précédentes, **caractérisée par le fait que** les fibres organiques sont des fibres non hygroscopiques présentant un taux massique d'eau absorbée, mesuré en essai d'immersion partielle selon la norme NF EN 12087, inférieur à 10 %.

6. Utilisation selon l'une quelconque des revendications précédentes, **caractérisée par le fait que** les fibres organiques sont des fibres synthétiques choisies parmi les fibres de polyester, de polyamide, de polymères acryliques, de polyuréthannes, de poly(alcool vinylique), de polyoléfines, de polymères phénoliques, de polyacrylates, de polymères vinyliques chlorés ou fluorés, d'aramide, de poly(arylétheréthercétone) (PEEK), de poly(benzimidazole) (PBI), de poly(éther imide) (PEI), et de poly(sulfure de phénylène) (PPS).

7. Utilisation selon l'une quelconque des revendications 1 à 5, **caractérisé par le fait que** les fibres naturelles sont des fibres cellulosiques choisies parmi le coton, le lin, le jute, le chanvre et autres fibres végétales, ou des fibres protéiniques choisies parmi la soie, la laine et les poils et plumes d'animaux, ces fibres ayant de préférence subi un traitement les rendant non hydrophiles (au sens de la norme NFP75-305) et/ou non hygroscopiques (au sens des normes NF EN 12429 ou NF EN 12087).

8. Utilisation selon l'une quelconque des revendications précédentes, **caractérisée par le fait que** le matériau thermoisolant a une tenue au feu le classant dans les catégories A à D, de préférence A à C, des Euroclasses de réaction au feu, cette classification des Euroclasses reprenant la classification de la norme NF EN 13501, qui utilise les méthodes d'essai des normes NF EN 1363, 1364, 1365 et 1366, concernant les essais d'évaluation de résistance au feu des matériaux de construction, y compris les matériaux isolants thermiques.

9. Utilisation selon l'une quelconque des revendications précédentes, **caractérisée par le fait que** le matériau textile non tissé présente une masse volumique comprise entre 5 et 50 kg/m³, de préférence entre 10 et 40 kg/m³ et en particulier entre 15 et 35 kg/m³.

10. Utilisation selon l'une quelconque des revendications précédentes, **caractérisée par le fait que** le matériau textile non tissé a une épaisseur comprise entre 40 et 120 mm, de préférence entre 50 et 100 mm.

11. Utilisation selon l'une quelconque des revendications précédentes, **caractérisée par le fait que** le matériau textile non-tissé présente une résistance thermique au moins égale à 2,4 m².K/W.

12. Utilisation selon l'une quelconque des revendications précédentes, **caractérisée par le fait que** le matériau thermoisolant se présente sous forme d'une bande ou d'un rouleau de matériau continu ou bien sous forme d'éléments individuels, souples ou rigides, de préférence sous forme d'éléments individuels de forme rectangulaire.

13. Procédé d'isolation thermique d'un bâtiment, comprenant le recouvrement d'une ou plusieurs surfaces extérieures ou intérieures dudit bâtiment par une ou plusieurs couches superposées d'un matériau thermoisolant ou l'incorporation d'une ou de plusieurs couches d'un matériau thermoisolant dans la structure des parois dudit bâtiment, ledit matériau thermoisolant comportant un matériau textile non-tissé constitué essentiellement de fibres organiques d'une finesse comprise entre 0,0025 dtex et 4,5 dtex, de préférence entre 0,1 et 1 dtex, ledit matériau textile non tissé ayant une épaisseur d'au moins 40 mm et une conductivité thermique λ, mesurée selon la norme ISO 8301, inférieure à 0,045 W/m.K, de préférence inférieure à 0,038 W/m.K.

14. Procédé selon la revendication 13, **caractérisé par le fait que** l'épaisseur totale de l'ensemble des couches superposées est suffisante pour obtenir une résistance thermique au moins égale à 2,4 m².K/W pour l'isolation thermique des murs et au moins égale à 4,5 m².K/W pour l'isolation thermique des toitures.

15. Matériau thermoisolant destiné à être utilisé pour l'isolation thermique de bâtiments, comportant un matériau textile non-tissé constitué essentiellement de fibres organiques d'une finesse comprise entre 0,0025 dtex et 4,5 dtex, de préférence entre 0,1 et 1 dtex, ledit matériau textile non tissé ayant une épaisseur d'au moins 40 mm et une conductivité thermique λ, mesurée selon la norme ISO 8301, inférieure à 0,045 W/m.K, de préférence inférieure à 0,038 W/m.K, les fibres organiques étant des fibres à la fois non hydrophiles au sens de la norme NFP75-305 et non hygroscopiques présentant un taux d'humidité massique à l'équilibre, mesuré à 23 °C et 50 % d'humidité relative selon la norme NF EN 12429, inférieur à 4 %, et/ou un taux massique d'eau absorbée, mesuré en essai d'immersion partielle selon la norme NF EN 12087, inférieur à 10 %.
